# EUROPÄISCHE PATENTSCHRIFT

(11) **EP 2 631 190 B1**
(45) Veröffentlichungstag und Bekanntmachung des Hinweises auf die Patenterteilung: **08.07.2015**
(21) Anmeldenummer: 13153635.1
(22) Anmeldetag: 01.02.2013
(51) Int. Cl.: B65D 23/10, B65G 47/90

(54) **Greifvorrichtung**
Gripping device
Dispositif de préhension

(30) Priorität: 27.02.2012 DE 102012101554
(43) Veröffentlichungstag der Anmeldung: 28.08.2013
(73) Patentinhaber: Krones Aktiengesellschaft, 93073 Neutraubling (DE)
(72) Erfinder: Kirschner, Peter, 93073 Neutraubling (DE); Bortenlaenger, Johannes, 93073 Neutraubling (DE)
(74) Vertreter: Benninger, Johannes

(56) Entgegenhaltungen:
- EP-A1- 1 243 531
- DE-A1- 2 111 501
- US-A- 2 730 279
- US-A- 3 648 427

## Beschreibung

Die vorliegende Erfindung betrifft eine Greifvorrichtung mit den Merkmalen des unabhängigen Anspruchs 1.

Zum Festhalten und Handhaben von Getränkebehältern wie Flaschen gibt es unterschiedliche Handhabungseinrichtungen, um die Behälter oder Flaschen an deren Halsbereich zu klemmen oder anderweitig zu fixieren und damit anheben und umsetzen zu können. Eine bekannte Variante solcher Halte- oder Handhabungseinrichtungen ist Teil sog. Greiftulpen, bei denen eine gesteuerte Greifglocke oder ein sog. Ringgreifer, die bspw. mit Unterdruck oder Überdruck arbeiten können, die Flaschen oder Behälter an deren oberem Mündungsbereich fixieren und halten kann. Nach der Deaktivierung der Haltekraft, bspw. des Unterdrucks oder Überdrucks, können die Flaschen oder Behälter abgesetzt und von der Greifglocke getrennt werden. Bei den bekannten Ringgreifern wird eine Manschette aufgeblasen oder mittels eines mit Druckluft beaufschlagten Zylinders gestaucht, so dass ein Reibschluss zwischen Behälter und Manschette entsteht.

Aus der US 2 730 279 A ist eine Greifeinrichtung bekannt, bei welcher zwei gegenüberliegende, am unteren Ende mit an einen Flaschenhals angepassten halbrunden Haltevorsprüngen versehene Greifklammern über einen Flaschenhals geführt werden können, wobei die Haltevorsprünge das Mundstück der Flasche, eine Verschlusskappe o.ä. untergreifen. Die Greifklammern werden dabei durch eine von außen einwirkende Federkraft zusammengepresst; der Freigabevorgang erfolgt durch eine zwischen den Greifklammern angeordnete, durch eine externe Steuereinrichtung angetriebene Kurvenscheibe.

Ähnliche Prinzipien verfolgen die DE 21 11 501 A1 und die US 3 648 427 A, bei welchen die Greifelemente bzw. -klammern in Grundstellung geöffnet sind und jeweils durch von oben ganz oder teilweise über die Greifelemente und die dazwischen angeordneten Flaschenhälse geführte Zylinder in eine geschlossene Transportposition gebracht werden. Das Öffnen der Greifelemente geschieht durch entgegengesetzte Bewegung des Zylinders.

Die EP 1 243 531 A1 wiederum beschreibt eine in einem Gehäuse angeordnete Greifvorrichtung mit Haltenocken, welche an Nockenführungen verschieblich gelagert sind. Wird das Gehäuse über einen Flaschenhals geführt, bewegt sich ein im Gehäuse befindlicher Stößel nach oben und die mit ihm gekoppelten Haltenocken in Schließposition. Die Greifvorrichtung öffnet sich, indem der Stößel durch Beaufschlagen mit Druckluft nach unten bewegt wird und die Haltenocken damit aus der Eingriffsposition entfernt werden.

Darüber hinaus sind mechanische Einrichtungen zum Tragen von Flaschen oder Getränkebehältern bekannt, so bspw. aus der DE 103 19 000 A1, die einen Henkel zum Tragen einer Getränkeflasche offenbart. Dieser Henkel soll dem leichten Fassen und Halten der Flaschen beim Transportieren dienen. Zum Fassen der Einrichtung mit der Hand ist ein umgreifbares Trageteil in Form eines Bügels o. dgl. vorgesehen, der mit einem Verankerungsteil verbunden ist, das die Form eines Ringes oder einer Spirale aufweisen und über den Flaschenhals gestreift werden kann. Das Verankerungsteil ist mit einer Mehrzahl von konzentrisch angeordneten flexiblen Zungen versehen, die eine elastische Verformbarkeit und eines ausreichende Steifigkeit aufweisen, um einerseits über den Flaschenhals gestreift werden zu können, ohne jedoch zu leicht nach oben abgezogen werden zu können, wenn die Flasche am Henkel getragen wird.

Eine ähnliche Halteeinrichtung mit flexiblen Haltezungen zur Fixierung von Getränkebehältern oder Flaschen ist aus der US 25 01 675 A bekannt. An einem Ring, der über den Flaschenhals gestülpt werden kann, sind Haltezungen bekannt, die sich elastisch an die Flaschenwand oder deren Hals anlegen und beim Anheben oder Handhaben der Flasche diese fixieren können.

Weitere Varianten solcher Halteeinrichtungen mit flexiblen Haltezungen sind bspw. aus der US 10 26 780 A, aus der US 55 13 885 A oder aus der EP 1 771 346 B1 bekannt.

Die in der EP 1 771 346 B1 offenbarte, zum Tragen einer Einzelflasche dienende Lösung besteht aus einem Ring, welcher an der Innenseite mehrere nach innen gerichtete Haltezungen aufweist. Ring und Haltezungen werden über den Halsring einer Flasche geführt, wobei die Haltezungen den Halsring untergreifen und halten. An der Außenseite des Rings sind einander plan gegenüberliegend zwei Halteschlaufen angebracht, welche nach Anbringen des Rings am Flaschenhals seitlich nach oben geführt werden und eine Trageeinrichtung bilden.

Die meisten Greifer weisen aktive Betätigungselemente auf, bei denen eine Fixierung der Greifobjekte nur durch eine dauerhaft aufgebrachte Betätigungskraft ermöglicht ist. Den bekannten passiven Halteeinrichtungen ist gemeinsam, dass die die Flaschen oder Getränkebehälter fixierenden Haltezungen eine definierte Elastizität aufweisen müssen, um einerseits das Gewicht der zu anhebenden oder zu fixierenden Gegenstände sicher zu halten, andererseits jedoch der Befestigung an der Flasche keine zu großen Verformungswiderstände entgegenzusetzen, was die Handhabung unkomfortabel machen würde. Dennoch muss die Elastizität und Festigkeit der Haltezungen der Halteeinrichtung so gewählt werden, dass eine Trennung von der Flasche oder dem Getränkebehälter mit vertretbarem Kraftaufwand ermöglicht ist. Der besondere Vorteil der bekannten Halteeinrichtungen ist ihr einfacher Aufbau, der eine kostengünstige Fertigung und einfache Handhabung ermöglicht. Aufgrund fehlender beweglicher Teile ist die mechanische Robustheit gegeben, die einen lang andauernden Einsatz ohne wesentlichen Verschleiß ermöglicht.

Ein vorrangiges Ziel der Erfindung besteht daher darin, eine universell verwendbare, einfach aufgebaute und mechanisch robuste Halteeinrichtung zur Verfügung zu stellen, die jedoch aufgrund einer einfachen Steuerbarkeit einen wesentlichen Nachteil der bekannten Halteeinrichtungen vermeidet und durch die Steuerbarkeit eine maschinelle und/oder automatisierte Verwendbarkeit erlaubt.

Dieses Ziel der Erfindung wird mit dem Gegenstand des unabhängigen Anspruchs erreicht. Merkmale vorteilhafter Weiterbildungen der Erfindung ergeben sich aus den abhängigen Ansprüchen. Zur Erreichung des genannten Ziels schlägt die vorliegende Erfindung eine Vorrichtung zum Greifen und/oder Halten von vorzugsweise stehenden Artikeln wie Flaschen, Dosen, Behältern o. dgl. vor, die einen Halterahmen, mehrere dort angeordnete Greifzungen sowie eine Entriegelungseinrichtung aufweist, durch welche ein umfasster Artikel gehalten und reversibel fixiert werden kann, wenn die Vorrichtung von oben auf dessen Außenmantelfläche, Mündungsbereich und/oder Halsabschnitt aufgeschoben wird. Die elastisch und/oder über Scharniere am Halterahmen fixierten Greifzungen werden in einer Weise verformt und/oder verschwenkt, dass sie jeweils mit ihren Stirnflächen oder stirnseitigen Kanten und/oder mit vorderen Abschnitten ihrer Seitenkanten den Artikel abstützen und am Abrutschen nach unten hindern.

Der Halterahmen der erfindungsgemäßen Vorrichtung wird zum Halten des Artikels an einem Kontaktabschnitt seiner Mantelfläche, der bspw. einen Vorsprung, eine Einschnürung und/oder einen Bereich definierter Oberflächenrauheit aufweisen kann, über den oberen Bereich des Artikels geschoben, so dass wenigstens drei den Kontaktabschnitt allseitig in ungefähr gleicher Höhe umgreifende, schwenkbar und/oder elastisch am Halterahmen der Vorrichtung aufgehängte und sich dort abstützende Greif- oder Haltezungen den Artikel halten und fixieren. Zu diesem Zweck weist der Halterahmen einen größeren Durchmesser auf als die Artikel im Bereich ihres Kontaktabschnittes. Die Halte- oder Greifzungen weisen jeweils nach innen aufeinander zu, so dass sie durch Aufschieben der Vorrichtung von oben über die Außenmantelfläche, den Mündungsbereich und/oder Halsabschnitt des Artikels gegen elastische Rückstellkräfte schräg nach oben auseinander gedrückt werden und jeweils in eine Winkellage zum Halterahmens, die mit der Vertikalen einen spitzen Winkel von vorzugsweise kleiner als 90° einschließt, gebracht sind, wobei sich Stirnflächen und/oder vordere Abschnitte der Seitenkanten der Greifzungen form- und/oder kraftschlüssig gegen den Kontaktabschnitt des Artikels abstützen. Ein besonderer Vorteil dieser erfindungsgemäßen Greifervorrichtung liegt in der energielos aktivierten und wirkenden Halteposition, da nach dem Verrasten des Artikels zwischen den Greifzungen keine weitere Halteenergie mehr aufgewendet werden muss, um den Artikel zu halten, zu fixieren, umzusetzen etc. Das Eigengewicht des Artikels, des Behälters, der Flasche o. dgl. sorgt vielmehr für die sichere Fixierung derselben in der Haltevorrichtung.

Der erfindungsgemäße Greifer basiert auf der Zusammenwirkung der als Lamellen ausgebildeten Greifzungen, die in sich verschachtelt sein können und dabei ein System ergeben, das sich gegenseitig stützt und in Kraft und Richtung beeinflusst. Es handelt sich dabei um einen passiven Greifer, bei dem das Eigengewicht des Greifobjektes bzw. des gehaltenen Artikels und ggf. eine Federkraft für das Greifen verantwortlich ist. Lediglich zum Lösen des Artikels und zum Öffnen der Greifzungen oder Lamellen ist eine Stellkraft erforderlich. Die beweglich im Halterahmen befestigten Greifzungen oder Lamellen sind jeweils an ihren unteren Enden beweglich befestigt und treffen sich mit ihren freien Enden, wobei am oberen Ende durch übereinander Legen eine Art Rosette oder Blendenanordnung gebildet sein kann, welche konisch zuläuft. Die Lamellen stützen sich gegeneinander ab und bleiben somit ohne äußeren Einfluss in gleicher Position. Bewegt man jetzt z.B. einen Flaschenhals durch die auseinander gebogenen Greifzungen oder Lamellen hindurch, so werden diese auseinander gespreizt und lassen den Flaschenhals passieren. Hat ein oberer Abschnitt der Flaschen die Lamellen passiert, so spreizen sich die Lamellen am Flaschenmundstück, an einem Neckring oder am Flaschendeckel ein und halten die Flasche durch einen Form- und/oder Reibschluss fest. Zusätzlich kann ein Sicherungsring die Lamellen nach unten drücken, um den durch das Eigengewicht des Greifobjektes erzeugten Effekt des Einspreizens zu verstärken. Um die Flasche wieder freizugeben, setzt man die Flasche wieder auf den Boden und entsichert die Lamellen mittels eines von unten herangeführten Entsicherungsringes oder wahlweise über eine geeignete Zugeinheit, welche die Lamellen nach oben zieht. Dadurch werden die Greifzungen oder Lamellen gleichzeitig nach oben und auseinander bewegt, wodurch die mittige Öffnung zwischen ihnen vergrößert und der Artikel oder die Flasche wieder freigegeben wird. Es sei an dieser Stelle angemerkt, dass die mittige Öffnung der nicht mit einem Behälter im Eingriff stehenden Greifzungen einen Durchmesser aufweist, der dem Durchmesser des Kontaktabschnittes des Artikels an der gewünschten Halte- oder Greifstelle des Behälters entspricht oder kleiner ist als dieser Durchmesser des Kontaktabschnittes.

Der Kontaktabschnitt des Artikels oder der Flasche kann sich wahlweise konisch verjüngen, so dass sich die Greifzungen vorzugsweise an einem Deckel oder einem Absatz oberhalb des Kontaktabschnittes abstützen und ggf. dort verrasten können. Die Stirnflächen der Greifzungen liegen dabei am Kontaktabschnitt bzw. am Flaschenhals an, wahlweise in Punkt- oder Linienberührung, je nach der Ausgestaltung der Stirnflächen. So können diese wahlweise geradlinig ausgebildet oder bspw. auch konkav gewölbt sein, wodurch ein großflächiger Kontakt mit dem Kontaktabschnitt des Artikels gegeben ist.

Den Greifzungen der erfindungsgemäßen Vorrichtung ist weiterhin eine Entriegelungseinrichtung zugeordnet, so dass eine fernsteuerbare Betätigung, insbesondere eine gesteuerte Entriegelung der Haltevorrichtung nach einer automatischen Verriegelung ermöglicht ist, wenn der fixierte Artikel wieder von der Vorrichtung getrennt werden soll. Bei einer bevorzugten Ausführungsform einer solchen Entriegelungseinrichtung kann diese die Greifzungen bei fehlender Zugbelastung auf die Stirnflächen der Greifzungen (aufgrund fehlender Schwerkraft durch den "hängenden" Artikel) nach oben ziehen. Bei einer solchen Zugrichtung verringert sich der eingeschlossene Winkel zwischen den Längserstreckungsrichtungen bzw. Oberflächen der Greifzungen und einer Vertikalen, so dass der Artikel oder gehaltene Behälter freigegeben wird.

Die Entriegelungseinrichtung kann bspw. durch einen Ring gebildet sein, der nahe am Halterahmen von innen nach oben schiebbar ist und von unten gegen die Greifzungen drücken kann, um diese zur Freigabe des Artikels nach oben zu schwenken. Wahlweise kann die Entriegelungseinrichtung auch eine Zugeinheit umfassen, die oberhalb der Greifzungen angeordnet und vertikal nach oben ziehbar ist, wobei die Greifzungen jeweils über Zugstangen, Zugseile o. dgl. an dieser Zugeinheit aufgehängt sind. Zweckmäßigerweise werden mittels der Entriegelungseinrichtung jeweils alle Greifzungen gleichzeitig und im selben Winkel betätigt.

Bei einer alternativen Ausführungsvariante kann die Entriegelungseinrichtung mehrere, jeweils an den Seitenkanten der sich zumindest teilweise überlappenden Greifzungen angreifende Schieberelemente umfassen, die zur Entriegelung der Greifzungen axial gegenüber einer Längserstreckungsrichtung der Vorrichtung verdreht werden können. Bei dieser Variante sind vorzugsweise mehrere solcher Schieberelemente an einem verdrehbaren Ring angeordnet, der oberhalb der Greifzungen am Rahmen der Vorrichtung gelagert ist, so dass bei einem Verdrehen dieses Rings die daran verankerten Schieberelemente - gebildet bspw. durch nach unten weisende Stifte - gegen die Seitenkanten der Greifzungen drücken, diese teilweise untergreifen und dadurch auseinander drücken oder auseinander fächern, so dass der zuvor gehaltene Artikel freigegeben wird. Die Schieberelemente können somit sinnvollerweise als Entriegelungsstifte fungieren, die in synchroner Bewegung alle Greifzungen untergreifen und auseinander drücken. Sinnvollerweise sind am verdrehbaren Entriegelungsring ebenso viele Stifte vorhanden wie Greifzungen. Ggf. können aber auch weniger Entriegelungsstifte vorgesehen sein, so dass bspw. jede zweite Greifzunge von ihrer jeweils benachbarten Greifzunge aktiviert wird, da sich die benachbarten Greifzungen an ihren Seitenkanten jeweils fächerartig überlappen.

Sowohl der senkrecht nach oben ziehbare und über vertikale Zugstangen oder Zugseile auf die Greifzungen einwirkende Zugring als auch der verdrehbare Ring, der über Schieberstifte auf die sich fächerartig überlappenden Greifzungen einwirkt, können wahlweise elektromotorisch, elektromagnetisch oder auf sonstige Weise ferngesteuert aktiviert werden.

Der ringförmige Halterahmen der erfindungsgemäßen Vorrichtung weist einen größeren Durchmesser auf als die Artikel im Bereich ihres Kontaktabschnittes. Dies kann bedeuten, dass der Halterahmen im Bereich eines Flaschenhalses relativ klein ausgebildet ist, da er lediglich den oberen Bereich der Flasche bzw. des Getränkebehälters umgreifen muss. Sollen mit der Vorrichtung größere Artikel wie Getränkedosen o. dgl. gegriffen werden, so ist der Durchmesser des Halterahmens entsprechend größer zu wählen. Zur Erzielung einer zuverlässigen Fixierung mit gleichmäßiger Verteilung der Haltekräfte und richtiger Zentrierung des gehaltenen Artikels sollten die Greifzungen jeweils in gleichmäßigen Bogenwinkelabständen über den Halterahmen verteilt aufgehängt sein.

Die Aufhängung der Greifzungen kann in geeigneter Weise elastisch federnd und/oder mit Scharnieren und Rückstellfedern o. dgl. gewählt sein. Die Greifzungen können wahlweise aus Federblech, Kunststoff etc. gefertigt sein. Eine Ruhelage der Greifzungen ist normalerweise so ausgerichtet, dass sie einen spitzen Winkel mit der Horizontalen einschließen und dadurch relativ flach liegen, wobei die Greifzungen ggf. fächerartig ineinander/übereinander greifen können, ähnlich einem "Blendenverschluss". Im Halterahmen können auf diese Weise drei, vier, fünf, sechs oder mehr gleichmäßig verteilte und jeweils gleichzeitig bewegbare Greifzungen angeordnet und beweglich bzw. elastisch gehalten sein. Darüber hinaus sind Ausführungsvarianten denkbar, bei denen die Greifzungen einstückig mit dem Halterahmen verbunden sind, was bspw. bei einem spritzgegossenen Bauteil der Fall sein kann. Hierbei sind die Scharniere der Greifzungen sinnvollerweise als sog. Filmscharniere ausgebildet. Besonders vorteilhaft lässt sich diese Ausführungsvariante mit der oben erwähnten verdrehbaren Entriegelungseinrichtung kombinieren, bei der keine weiteren Verbindungsteile wie Zugstangen oder Zugseile an den Greifzungen angreifen müssen, sondern die Entriegelung über einen verdrehbaren Ring mit daran angeordneten Entriegelungsstiften erfolgt.

Der erfindungsgemäße Greifer bringt den Vorteil mit sich, dass der Haltemechanismus keine zusätzlich aufgebrachte Energie benötigt, um das Halten zu gewähren. Es wird lediglich eine Energie für den Sicherungs- und Entsicherungsaufwand erforderlich. Zusätzlich ist es mit diesem Greifer möglich, eine große Bandbreite (mehrere Flaschengrößen) zu verarbeiten, weil die Lamellen bei großen wie kleinen Flaschenhälsen immer in Richtung Zentrum bewegt werden und dadurch den selbstsichernden Zustand anstreben.

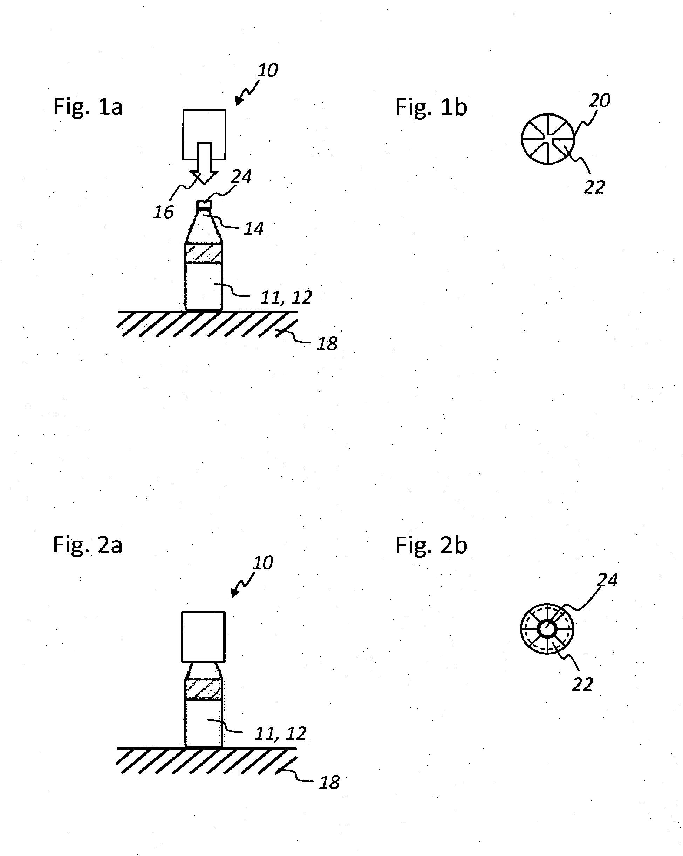

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Zudem wurde bei den Figuren 1 bis 9 und 11 der Übersichtlichkeit halber auf die Darstellung der Entriegelungseinrichtung verzichtet.

Figuren 1 bis 6 zeigen in aufeinander folgende schematische Ansichten für den Einsatz einer erfindungsgemäßen Greifvorrichtung.

Figuren 7a bis 7d zeigen schematische Ansichten von Greifvorrichtungen mit verschiedenen Ausführungsvarianten von Greifzungen.

Fig. 8 zeigt eine weitere schematische Ansicht einer Ausführungsvariante einer Greifvorrichtung.

Figuren 9 und 10 zeigen schematische Ansichten von Bewegungsabläufen beim Aufsetzen der Greifvorrichtung auf einen Artikel bzw. Flasche.

Fig. 11 zeigt in zwei Detailansichten Kontaktbereiche zwischen Greifzungen der Greifvorrichtung und einem Artikel bzw. einer Flasche.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

Die schematischen Darstellungen der Figuren 1 bis 6 zeigen, unter Verzicht auf die Darstellung einer Entriegelungseinrichtung, in aufeinander folgenden Ansichten den typischen Einsatz einer Ausführungsvariante einer erfindungsgemäßen Greifvorrichtung 10, die bspw. zum Greifen und Anheben einer Flasche 12, eines Getränkebehälters, einer Dose oder eines Artikels 11 verwendet werden kann. Die Greifvorrichtung 10 wird von oben an die Flasche 12 angenähert (Fig. 1a) und über ihren Flaschenhals 14 gestülpt, bis es zu einer Verrastung zwischen der Greifvorrichtung 10 und der Flasche 12 kommt (Fig. 2a). Hierbei sind keinerlei zusätzlichen Stellkräfte erforderlich, sondern lediglich die Stellkraft 16 zum Aufsetzen der Greifvorrichtung 10 von oben auf die auf einer festen Unterlage 18 stehende Flasche. Während die schematische Seitenansicht der Fig. 1 a die Annäherung der Greifvorrichtung 10 von oben an die Flasche 12 verdeutlicht, lässt die schematische Draufsicht der Fig. 1b einen äußeren Halterahmen 20 der Greifvorrichtung 10 erkennen, der im gezeigten Ausführungsbeispiel eine zylindrische Form aufweist und an dessen Innenseite mehrere Greiflamellen oder Greifzungen 22 schwenkbar und/oder flexibel beweglich gelagert sind, die entweder überlappen können oder wie in der Darstellung der Figuren 1b bis 6b voneinander beabstandet und sich zu ihren freien Enden, die aufeinander zuweisen, verjüngen können. Sobald die Greifvorrichtung 10 auf die Flasche 12 aufgesetzt ist (Fig. 2a), verrasten die stirnseitigen freien Enden der Greifzungen 22 mit dem einen Absatz aufweisenden Flaschenhals 14, so dass bspw. gemäß Fig. 2b ein Deckel 24 oder ein Neckring (nicht dargestellt) der Flasche 12 oder deren Mündungsbereich 23 sichtbar sein kann. Die Greifzungen 22 werden dabei auseinander und nach oben gedrückt, wahlweise gegen die Rückstellkräfte von Federn (nicht dargestellt) oder gegen elastische Rückstellkräfte aufgrund einer Biegeverformung der Greifzungen 22.

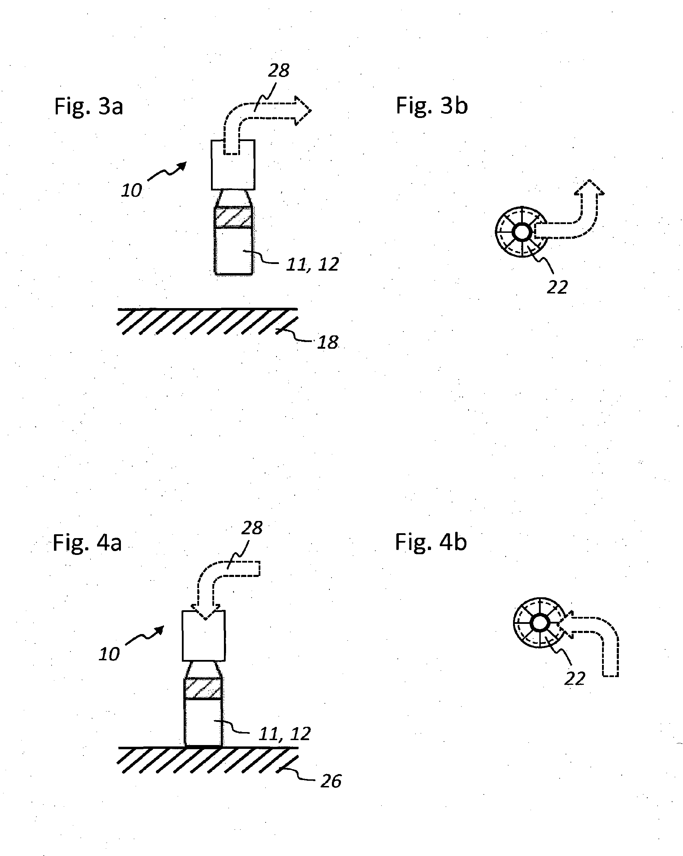

Sobald die Greifvorrichtung 10 mit der Flasche 12 verrastet ist (Fig. 2a, Fig. 2b), können beide Teile von der ersten Unterlage 18 angehoben und in eine gewünschte Richtung bewegt werden (Fig. 3a, Fig. 3b), um bspw. mehrere Flaschen 12 mit gleichartigen Greifvorrichtungen 10 von der ersten Unterlage 18 in ein entfernt stehendes Aufnahmebehältnis (nicht dargestellt) oder auf eine zweite Unterlage 26 abzusetzen (Fig. 4a, Fig. 4b). Die Bewegungssteuerung der Greifvorrichtung 10 mitsamt der daran gehaltenen Flasche 12 ist durch die Pfeile 28 angedeutet.

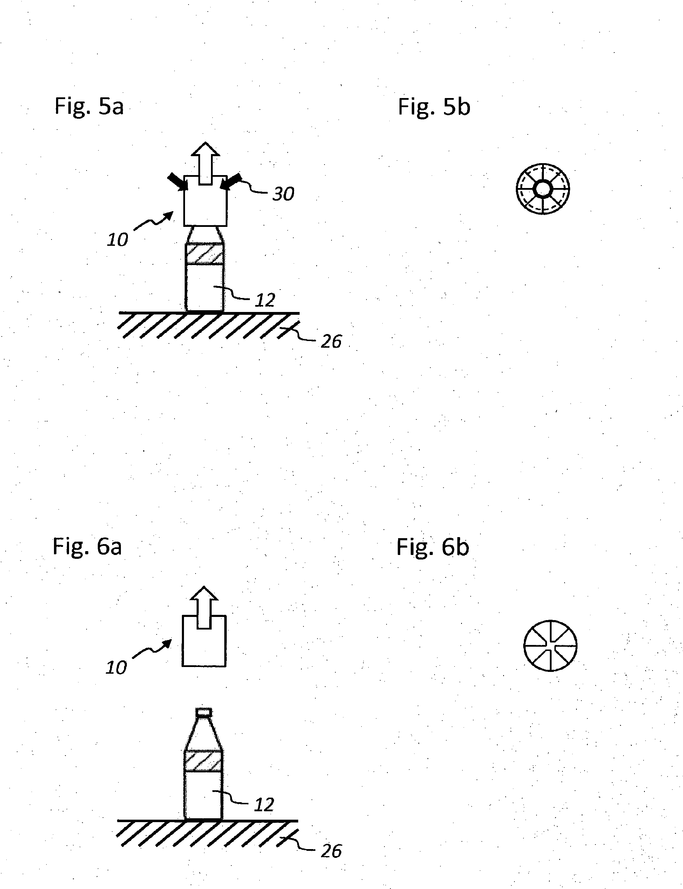

Wie durch die Fig. 5a verdeutlicht, kann die Greifvorrichtung 10 durch Betätigung einer Entriegelungseinrichtung 30 von der Flasche 12 getrennt werden. Die hier nicht näher dargestellte Entriegelungseinrichtung 30 ist durch zwei Pfeile in Fig. 5a angedeutet, welche die für die Trennung der Rastverbindung zwischen der Vorrichtung 10 und der Flasche 12 erforderlichen Betätigungskräfte verdeutlichen. Nachdem die Vorrichtung 10 von der Flasche 12 getrennt ist, kann die Flasche 12 auf der zweiten Unterlage 26 verbleiben, während die Greifvorrichtung 10 nach oben abgehoben werden kann (Fig. 6a, Fig. 6b).

Grundsätzlich eignet sich die in den Figuren 1 bis 6 nur schematisch angedeutete Greifvorrichtung 10 zur Aufnahme und Fixierung der unterschiedlichsten Artikel 11, sofern diese mindestens einen Absatz, wie bspw. einen Neckring, einen Deckel oder dgl. oder einen Bereich mit erhöhter Rauheit an ihrer äußeren Mantelfläche aufweisen, so dass eine Verbindung zwischen der Artikelmantelfläche und den Greifzungen 22 ermöglicht ist, die sich an dieser gleichmäßig abstützen können. Der Artikel 11 bzw. die Flasche 12 kann dann angehoben und umgesetzt werden (Fig. 2, Fig. 3, Fig. 4). Zum Lösen der Greifvorrichtung 10, d.h. zum Trennen vom Artikel 11 oder von der Flasche 12 muss eine Betätigungskraft aufgebracht werden, um eine Betätigungs- oder Entriegelungseinrichtung 30 zu aktivieren, so dass die Verbindung gelöst wird (Fig. 5).

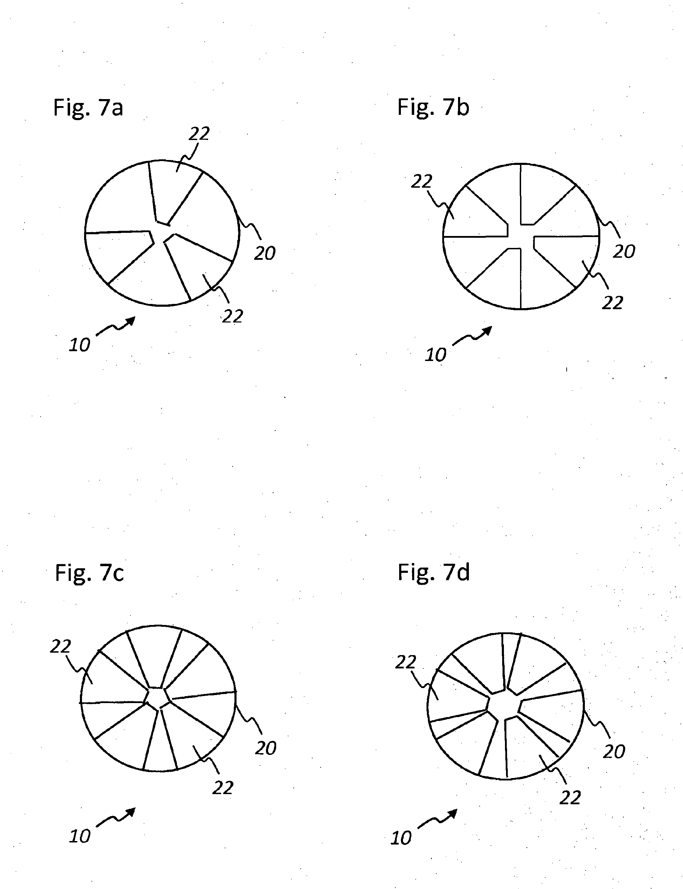

Die Fig. 7 zeigt, ebenfalls unter Verzicht auf die Darstellung einer Entriegelungseinrichtung, verschiedene Ansichten einer Ausführungsvariante der erfindungsgemäßen Greifvorrichtung 10 mit drei (Fig. 7a), vier (Fig. 7b), fünf (Fig. 7c) und sechs Greifzungen 22 (Fig. 7d), die jeweils zum Halten und Fixieren der Flaschen 12 (vgl. Figuren 1 bis 6) dienen. Jede der symmetrisch angeordneten Greifzungen 22 ist jeweils an der Innenseite des Halterahmens 20 schwenkbeweglich oder flexibel gelagert, so dass eine Flasche 12 oder ein anderer Artikel, der durch die zwischen den sich nach oben ausweichenden Greifzungen 22 gebildete mittige Öffnung passt, an seiner Mantelfläche durch die Greifzungen 22 gehalten werden kann.

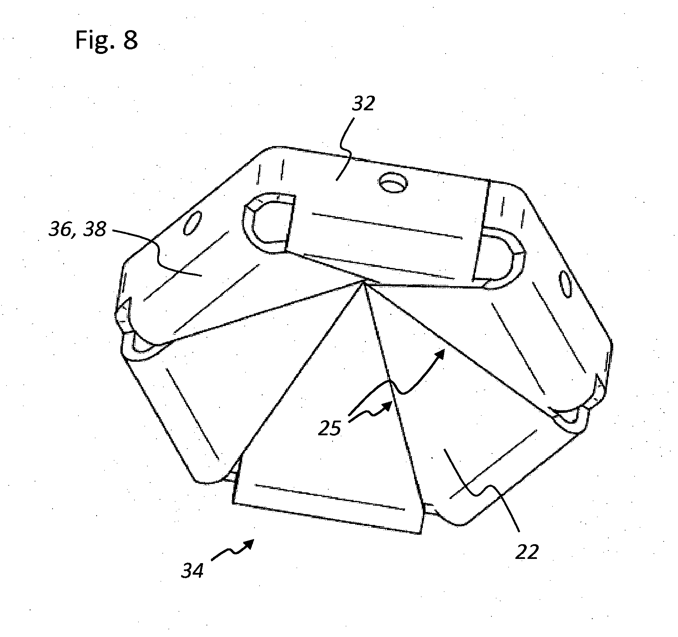

Wahlweise können die Greifzungen 22 auch gemäß Fig. 8 teilweise überlappend angeordnet sein, so dass sie in Art einer sich öffnenden Blende ausweichen und einen variablen mittigen Durchlass für den zu fixierenden Artikel bilden. Die dort dargestellte Anordnung von sechs dreieckförmigen Greifzungen 22, die im entspannten Zustand eine dachförmige Kontur bilden und sich teilweise überlappen, ist durch ein einziges Bauteil gebildet, das bspw. aus Kunststoff gefertigt sein kann, so dass durch die Materialstärke und Materialauswahl die gewünschten Elastizitätseigenschaften eingestellt werden können. Ein sechseckiger Rahmen 32 dieses als Biegefächer 34 bezeichneten einstückigen Bauteils kann im entsprechend geformten Halterahmen 20 (vgl. Figuren 1 bis 6) befestigt werden, so dass die Übergangsbereiche 36 zwischen diesem Rahmen 32 und den Greifzungen 22 jeweils als Scharniere 38 fungieren, während die Greifzungen 22 selbst bei ihrer Bewegung nur schwach verformt und/oder verwölbt werden.

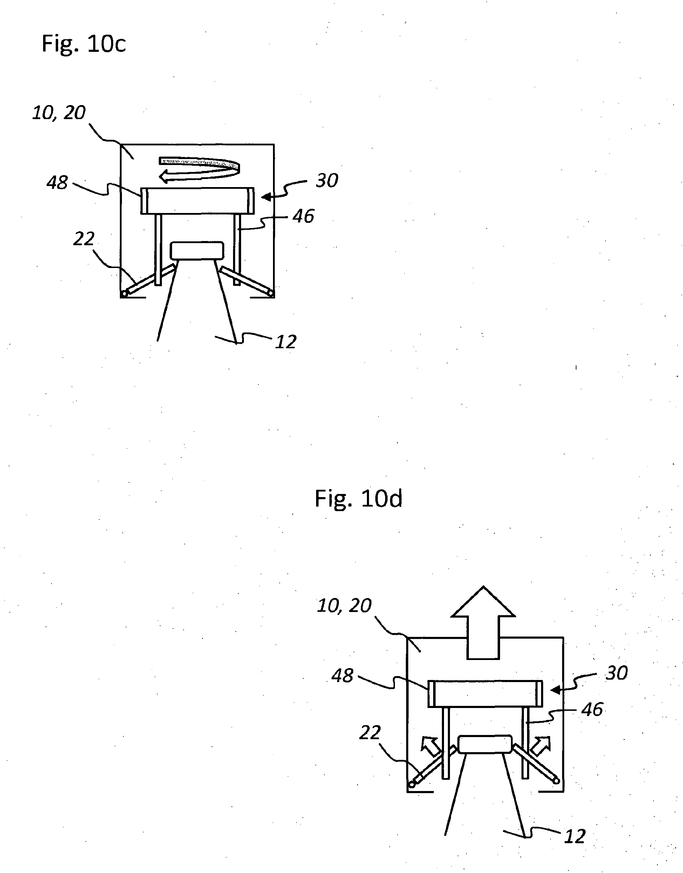

Bei der in Fig. 8 gezeigten alternativen Ausführungsvariante überlappen sich die jeweils benachbarten Greifzungen 22 jeweils an ihren Seitenkanten 25, so dass der zu greifende Artikel 11 bzw. die Flasche 12 wahlweise nicht nur mit dem Stirnbereich 21 der Greifzunge 22 kontaktiert und gehalten werden kann, sondern zumindest teilweise auch mit den vorderen Abschnitten der entsprechenden Seitenkanten 25. Wahlweise kann bei dieser Variante die Entriegelungseinrichtung 30 entsprechend Fig. 10c auch mehrere, jeweils an den Seitenkanten 25 der sich zumindest teilweise überlappenden Greifzungen 22 angreifende Schieberelemente 46 umfassen, die zur Entriegelung der Greifzungen 22 axial gegenüber einer Längserstreckungsrichtung der Greifvorrichtung 10 verdreht werden können. Bei dieser Variante sind mehrere solcher Schieberelemente 46 an einem verdrehbaren Ring 48 angeordnet, der oberhalb der Greifzungen 22 am Halterahmen 20 der Vorrichtung 10 gelagert ist, so dass bei einem Verdrehen dieses Rings 48 (Fig. 10c) die daran verankerten Schieberelemente 46 - gebildet bspw. durch nach unten weisende Stifte - gegen die Seitenkanten 25 der Greifzungen 22 drücken, diese teilweise untergreifen und dadurch auseinander drücken oder auseinander fächern (Fig. 10d), so dass der zuvor gehaltene Artikel 11 freigegeben wird. Die Vorrichtung 10 mitsamt dem Halterahmen 20 kann bei verdrehtem Ring 48 und aufgefächerten Greifzungen 22 somit gemäß Fig. 10d nach oben abgezogen werden. Die Schieberelemente 46 bilden somit Entriegelungsstifte, die in synchroner Bewegung alle Greifzungen 22 an deren Seitenkanten 25 untergreifen und auseinander drücken. Sinnvollerweise sind am verdrehbaren Entriegelungsring 48 ebenso viele Stifte 48 vorhanden wie Greifzungen 22.

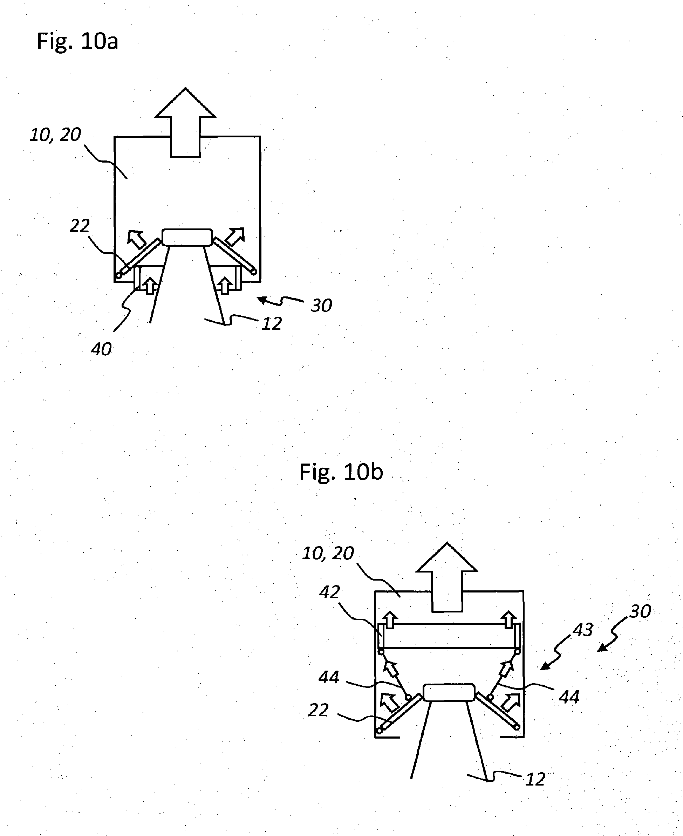

Alle in der Fig. 10 gezeigten Entriegelungseinrichtungen 30 können wahlweise elektromotorisch, elektromagnetisch oder auf sonstige Weise ferngesteuert aktiviert werden.

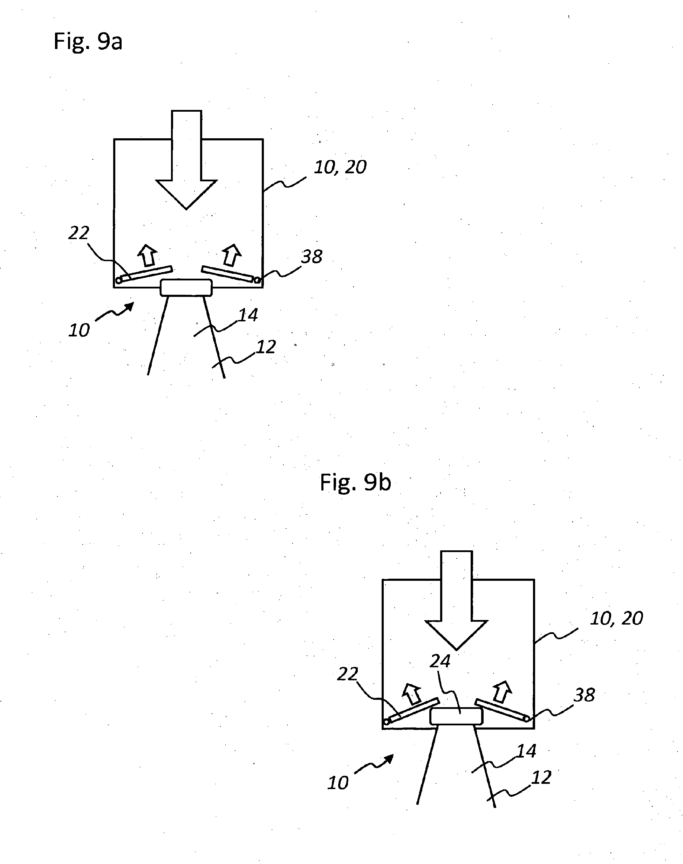

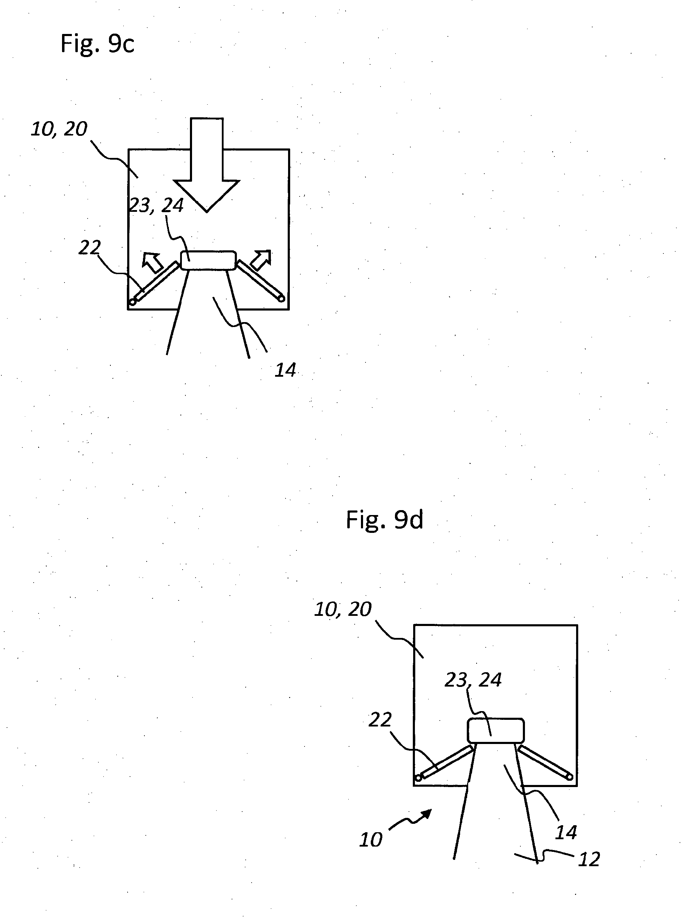

Die Figuren 9 und 10 zeigen anhand von schematischen Ansichten die Bewegungsabläufe beim Aufsetzen der Greifvorrichtung 10 auf eine Flasche 12 (Fig. 9) und bei deren Lösen von dieser Flasche 12 (Fig. 10) durch Betätigung der Entriegelungseinrichtung 30. So verdeutlicht die Fig. 9a das vertikale Aufsetzen der Greifvorrichtung 10 auf den Hals 14 der Flasche 12, wobei die in den Scharnieren 38 im Halterahmen 20 gelagerten Greifzungen 22 nach oben ausweichen, sobald sie den Mündungsbereich 23 oder Deckel 24 der Flasche 12 kontaktieren (Fig. 9b). Die in den Figuren 9b und 9c erkennbare Ausweichbewegung kann wahlweise gegen die Rückstellkräfte von Federn (nicht dargestellt) und/oder gegen elastische Rückstellkräfte der flächigen Greifzungen 22 und/oder der elastisch nachgiebigen Übergangsbereiche 36 zum Rahmen 32 (vgl. Fig. 8) des einstückig ausgebildeten Biegefächers 34 erfolgen. Sobald die Stirnseiten an den freien Enden der Greifzungen 22 den Mündungsbereich 23 oder Deckel 24 passiert haben, legen sie sich an den oberen Abschnitt des Flaschenhalses 14 an und verrasten dort, wie dies in Fig. 9d gezeigt ist. Durch Anheben der Greifvorrichtung 10 kann somit auch die dort fixierte Flasche 12 angehoben werden.

Um diese Rastverbindung (Fig. 9d) zu lösen, müssen die Greifzungen 22 jeweils nach oben gedrückt oder gezogen werden, wie dies beispielhaft in den Figuren 10a und 10b gezeigt ist. So zeigt die schematische Ansicht der Fig. 10a eine erste Variante der Entriegelungseinrichtung 30, die durch einen Ring 40 gebildet ist, der bei Betätigung die Greifzungen 22 von unten nach oben drückt, so dass die Flasche 12 freigegeben wird. Die schematische Ansicht der Fig. 10b zeigt eine zweite Variante der Entriegelungseinrichtung 30, die eine Zugeinheit 43 umfasst, die durch einen oberhalb der Greifzungen 22 angeordneten Ring 42 gebildet ist, der über Zugseile 44 oder Zugstangen o. dgl. mit den Greifzungen 22 verbunden ist, so dass beim Schieben des Ringes 42 nach oben die Greifzungen 22 nach oben gezogen werden, wodurch die Flasche 12 freigegeben wird.

Wenn im vorliegenden Zusammenhang von einer Zusammenwirkung der stirnseitigen freien Enden der Greifzungen 22 mit dem zu greifenden Artikel 11 oder der zu greifenden Flasche 12 die Rede ist, so wird dies anhand eines Einrastens der Greifzungen in einem Bereich der Flasche 12 unmittelbar unterhalb ihres Deckels 24 erläutert (vgl. z.B. Fig. 9d). Herkömmliche PET-Behälter, die aus Vorformlingen durch Blasumformen hergestellt sind, weisen üblicherweise einen sog. Neckring am oberen Halsbereich unmittelbar unterhalb ihres Gewindeabschnittes auf, der der leichteren Handhabung der Vorformlinge und Behälter beim Blasformen sowie der Behälter beim Befüllen und/oder beim Transport der Behälter dient. Auch ein solcher Neckring eignet sich zur Abstützung der Greifzungen 22, ebenso wie der Deckel 24 oder bspw. ein zylindrischer Abschnitt eines Artikels 11 mit erhöhter Rauheit zur Erzielung eines Reibschlusses.

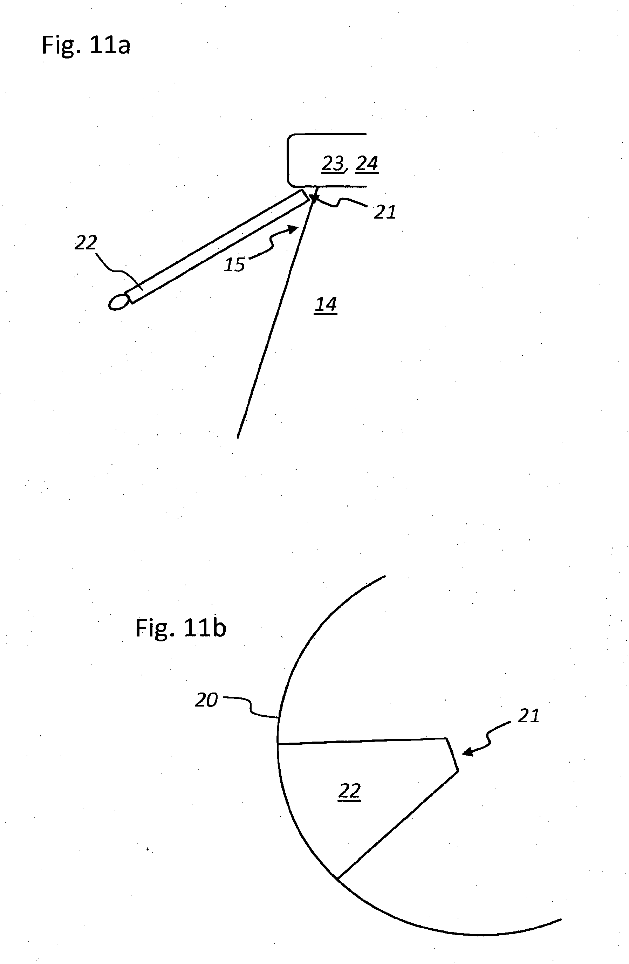

Die Fig. 11 verdeutlicht in zwei verschiedenen Detailansichten die Ausgestaltung eines Kontaktabschnitts 15 zwischen der Greifvorrichtung 10 und einem Artikel 11 bzw. einer Flasche 12. Der Kontaktabschnitt 15 befindet sich im gezeigten Ausführungsbeispiel am Flaschenhals 14, typischerweise an einer Unterkante des Deckels 24, da sich der Flaschenhals 14 nach oben konisch verjüngt, so dass die am Kontaktabschnitt 15 anliegenden Stirnflächen 21 der Greifzungen 22 nach dem Aufsetzen auf die Flasche 12 über den Deckel 24 gleiten und anschließend unterhalb des Deckels 24 verrasten (vgl. Fig. 11a), wobei die Stirnflächen 21 am Kontaktabschnitt 15 bzw. am Flaschenhals 14 anliegen, wahlweise in Punkt- oder Linienberührung, je nach Ausgestaltung der Stirnflächen 21 der Greifzungen 22. So können die Stirnflächen 21 wahlweise geradlinig ausgebildet (vgl. Fig. 11b) oder bspw. konkav gewölbt sein, wodurch ein großflächiger Kontakt mit dem Kontaktabschnitt 15 der Flasche 12 hergestellt werden kann.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

## Patentansprüche

1. Vorrichtung (10) zum Greifen und/oder Halten von vorzugsweise stehenden Artikeln (11) wie Flaschen (12), Dosen, Behältern o. dgl. an einem Kontaktabschnitt (15) ihrer Mantelfläche, mit wenigstens drei den Kontaktabschnitt (15) allseitig in ungefähr gleicher Höhe umgreifenden, schwenkbar und/oder elastisch an einem Halterahmen (20) der Vorrichtung (10) aufgehängten und sich dort abstützenden, jeweils nach innen aufeinander zuweisenden Greifzungen (22), die durch Aufschieben der Vorrichtung (10) über einen Halsabschnitt eines Artikels (11) und parallel zur Längserstreckungsrichtung des Artikels (11) gegen elastische Rückstellkräfte schräg nach oben auseinander gedrückt werden und jeweils in eine Winkellage zum Halterahmen (20) gebracht sind, **dadurch gekennzeichnet, dass** sich Stirnflächen (21) und/oder Seitenkanten der Greifzungen (22) form- und/oder kraftschlüssig gegen den Kontaktabschnitt (15) des Artikels (11) abstützen, und dass den Greifzungen (22) eine Entriegelungseinrichtung (30) zugeordnet ist, welche jeweils alle Greifzungen (22) gleichzeitig und im selben Winkel betätigt.

2. Vorrichtung nach Anspruch 1, bei der die Greifzungen (22) bei nicht betätigter Entriegelungseinrichtung (30) durch die Schwerkraft eines an den Greifzungen (22) hängenden Artikels (11) nach unten in eine verrastete Lage gezogen sind.

3. Vorrichtung nach einem der Ansprüche 1 bis 2, bei der die Entriegelungseinrichtung (30) durch einen Ring (40) gebildet ist, der im Bereich des Halterahmens (20) nach oben gegen die Unterseite der Greifzungen (22) schiebbar ist.

4. Vorrichtung nach einem der Ansprüche 1 bis 2, bei der die Entriegelungseinrichtung (30) eine Zugeinheit umfasst, die oberhalb der Greifzungen (22) angeordnet und vertikal nach oben ziehbar ist, und an der die Greifzungen (22) jeweils über Zugstangen (44), Zugseile o. dgl. aufgehängt sind.

5. Vorrichtung nach einem der Ansprüche 1 bis 2, bei der die Entriegelungseinrichtung (30) mehrere, jeweils an den Seitenkanten der sich zumindest teilweise überlappenden Greifzungen (22) angreifende Schieberelemente umfasst, die zur Entriegelung der Greifzungen (22) axial gegenüber einer Längserstreckungsrichtung der Vorrichtung (10) verdrehbar sind.

6. Vorrichtung nach einem der Ansprüche 3 bis 5, bei der die Entriegelungseinrichtung (30) jeweils mit allen Greifzungen (22) zu deren synchroner Bewegung gekoppelt ist.

7. Vorrichtung nach einem der Ansprüche 1 bis 6, die einen ringförmigen Halterahmen (20) größeren Durchmessers als die Artikel (11) im Bereich ihres Kontaktabschnittes (15) aufweist.

8. Vorrichtung nach Anspruch 7, bei der die Greifzungen (22) jeweils in gleichmäßigen Bogenwinkelabständen innerhalb des Halterahmens (20) aufgehängt sind.

9. Vorrichtung nach einem der Ansprüche 1 bis 8, bei der die Greifzungen (22) im Halterahmen (20) elastisch federnd und/oder mittels Scharnieren (38) und/oder Rückstellfedern aufgehängt sind.

10. Vorrichtung nach einem der Ansprüche 1 bis 9, bei der die Greifzungen (22) an einem gemeinsamen Rahmen (32) verankert sind und einen einstückigen Biegefächer bilden, der im Halterahmen (20) befestigt ist.

11. Vorrichtung nach Anspruch 9 oder 10, bei dem sich die elastisch federnd und/oder mittels Scharnieren (38) im Halterahmen (20) aufgehängten Greifzungen (22) oder die am gemeinsamen Rahmen (32) verankerten Greifzungen (22) des einstückigen Biegefächers zumindest teilweise an Seitenkanten fächerartig überdecken.

## Claims

1. A device (10) for gripping and/or holding articles (11), which are preferably in a standing position, such as bottles (12), cans, containers, or the like, at a contact section (15) of the lateral surface of the articles (11) with at least three gripping tongues (22) respectively pointing inward toward each other and engaging around the contact section (15) on all sides in approximately the same height, said gripping tongues (22) being mounted pivotally and/or elastically at a support frame (20) of the device (10) and being supported there, which gripping tongues (22) are pushed apart diagonally upward and each brought into an angular position in relation to the support frame (20) by sliding the device (10) over a neck section of an article (11) in parallel to the longitudinal extension of the article (11) and against elastic restoring forces, **characterised in that** the face surfaces (21) and/or the lateral edges of the gripping tongues (22) are form- and/or force-lockingly supported against the contact surface (15) of the article (11), and **in that** the gripping tongues (22) are associated with a releasing device (30), which actuates all gripping tongues (22), respectively, at the same time and in the same angle.

2. The device as recited in claim 1 wherein the gripping tongues (22) are pulled downward into a latched position by the gravitational pull of an article (11) suspended from the gripping tongues (22) when the releasing device (30) is not actuated.

3. The device as recited in one of the claims 1 to 2 wherein the releasing device (30) is formed by a ring (40), which is slidable upward against the underside of the gripping tongues (22) in the area of the support frame (20).

4. The device as recited in one of the claims 1 to 2 wherein the releasing device (30) comprises a traction unit, which is arranged above the gripping tongues (22), and which is pullable vertically upward, and at which traction unit the gripping tongues (22) are respectively suspended by means of traction bars (44), traction ropes, or the like.

5. The device as recited in one of the claims 1 to 2 wherein the releasing device (30) comprises several pusher elements, which each engage at the lateral edges of the at least partly overlapping gripping tongues (22), which pusher elements are twistable axially in relation to a longitudinal extension of the device (10) for releasing the gripping tongues (22).

6. The device as recited in one of the claims 3 to 5 wherein the releasing device (30) is respectively coupled to all gripping tongues (22) for synchronously moving them.

7. The device as recited in one of the claims 1 to 6 which has an annular support frame (20) with a diameter that is greater than the diameter of the articles (11) in the area of their contact section (15).

8. The device as recited in claim 7 wherein the gripping tongues (22) are each suspended at regular radian intervals within the support frame (20).

9. The device as recited in one of the claims 1 to 8 wherein the gripping tongues (22) are suspended in the support frame (20) in an elastically resilient manner and/or by means of hinges and/or return springs.

10. The device as recited in one of the claims 1 to 9 wherein the gripping tongues (22) are anchored at a common frame (32) and form a one-piece bending fan, which is fastened in the support frame (20).

11. The device as recited in claim 9 or 10 wherein the gripping tongues (22), which are suspended in the support frame (20) in an elastically resilient manner and/or by means of hinges (38), or the gripping tongues (22) of the one-piece bending fan, which are anchored at the common frame (32), at least partly, at lateral edges, overlap in a fan-like manner.

## Revendications

1. Dispositif (10) pour saisir et/ou tenir des articles (11) de préférence en position debout tels que des bouteilles (12), des boîtes de conserve, des récipients ou analogues au niveau d'une portion de contact (15) de leur surface latérale, pourvu d'au moins trois languettes de préhension (22) dirigées chacune l'une vers l'autre et vers l'intérieur, entourant de tout côté environ à la même hauteur la portion de contact (15), accrochées de manière articulable et/ou élastique à un cadre de support (20) du dispositif (10) et s'y appuyant, lesquelles sont, en glissant le dispositif (10) sur une portion de goulot d'un article (11) et parallèlement à l'étendue longitudinale de l'article (11), écartées l'une de l'autre par pression en biais vers le haut contre des forces de rappel élastiques, et amenées chacune dans une position angulaire au cadre de support (20), **caractérisé en ce que** les surfaces frontales (21) et/ou les arêtes latérales des languettes de préhension (22) s'appuient par engagement positif et/ou par force contre la portion de contact (15) de l'article (11), et qu'est attribué aux languettes de préhension (22) un dispositif de déverrouillage (30) qui actionne respectivement toutes les languettes de préhension (22) au même moment et dans le même angle.

2. Dispositif selon la revendication 1, les languettes de préhension (22) étant, lorsque le dispositif de déverrouillage (30) n'est pas en marche, tirées vers le bas, dans une position verrouillée, par la force de gravitation d'un article (11) accroché aux languettes de préhension (22).

3. Dispositif selon l'une des revendications 1 à 2, le dispositif de déverrouillage (30) étant formé par un anneau (40) glissable dans la zone du cadre de support (20) vers le haut contre l'envers des languettes de préhension (22).

4. Dispositif selon l'une des revendications 1 à 2, le dispositif de déverrouillage (30) comprenant une unité de traction agencée au-dessus des languettes de préhension (22) et qui peut être tirée à la verticale vers le haut, et les languettes de préhension (22) étant chacune accrochées audit dispositif au moyen de tirants d'assemblage (44), de câbles de traction ou analogues.

5. Dispositif selon l'une des revendications 1 à 2, le dispositif de déverrouillage (30) comprenant plusieurs éléments coulissant actifs aux arêtes latérales respectives des languettes de préhension (22) se chevauchant au moins partiellement, lesquels peuvent être retournés axialement par rapport à une étendue longitudinale du dispositif (10) pour déverrouiller les languettes de préhension (22).

6. Dispositif selon l'une des revendications 3 à 5, le dispositif de déverrouillage (30) étant couplé respectivement à toutes les languettes de préhension (22) pour synchroniser leur mouvement.

7. Dispositif selon l'une des revendications 1 à 6, qui présente un cadre de support (20) en forme d'anneau de diamètre supérieur aux articles (11) dans leur zone de portion de contact (15).

8. Dispositif selon la revendication 7, les languettes de préhension (22) étant accrochées chacune à intervalles réguliers d'angle d'arc au sein du cadre de support (20).

9. Dispositif selon l'une des revendications 1 à 8, les languettes de préhension (22) étant accrochées dans le cadre de support (20) par liaison résiliente élastique et/ou au moyen de charnières (38) et/ou de ressorts de rappel.

10. Dispositif selon l'une des revendications 1 à 9, les languettes de préhension (22) étant solidarisés à un cadre (32) commun et formant un éventail courbé monobloc fixé au cadre de support (20).

11. Dispositif selon la revendication 9 ou 10, les languettes de préhension (22) accrochées par liaison résiliente élastique et/ou au moyen de charnières (38) dans le cadre de support (20), ou les languettes de préhension (22) de l'éventail courbé monobloc, solidarisées au cadre (32) commun, se chevauchant en éventail au moins partiellement au niveau des arêtes latérales.
